# EUROPEAN PATENT APPLICATION

(11) **EP 1 276 346 A1**
(43) Date of publication of application: **15.01.2003**
(21) Application number: 01908155.3
(22) Date of filing: 28.02.2001
(51) Int. Cl.: H04R 1/02, H04R 1/26, B60R 11/02

(54) **SPEAKER BOX**

(30) Priority: 14.03.2000 JP 2000117234; 08.09.2000 JP 2000272640
(71) Applicant: Sawaki Co., Ltd., Chiba-shi, Chiba 260-0842 (JP)
(72) Inventor: SAWAKI, Shiro, c/o Sawaki Co., Ltd, Chiba-shi, Chiba 260-0842 (JP); SATO, Keishu, c/o Sawaki Co., Ltd, Chiba-shi, Chiba 260-0842 (JP)
(74) Representative: Garratt, Peter Douglas
(86) International application number: JP0101517
(87) International publication number: WO01069966

(57) **Abstract**

The present invention is to provide a speaker box which is buried in an existing mounting hole on an inner wall of a vehicle so as to prevent acoustic waves from generating a resonance phenomenon. A speaker box (1) used in a vehicle (A) is characterized to have such a structure that the speaker box (1) is buried in a mounting hole (3) in an inner wall (a') of the vehicle instead of an existing speaker which is previously buried in the mounting hole (3).

## Description

### Technical Field

The present invention relates to a speaker box and, more particularly, to the speaker box which is buried in an existing mounting hole on an inner wall of a vehicle.

### Background Art

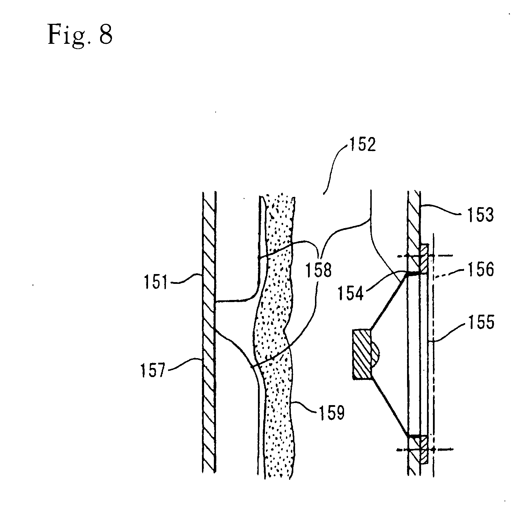

Recently, it has become an everyday affair to enjoy sound in a car from AM, FM, CD, or the like through speakers during driving a vehicle. Most of the speakers built in the vehicle are used to be protrudingly formed in the vicinity of a dash board or a rear seat, but in these days as shown in FIG. 8, it has been seen that a speaker is built therein through a mounting hole 154 of a genuine (existing) speaker, which is bored in an inner wall board 53 that constitutes a double-wall structure of a vehicle door 151, in either states of exposing a speaker 155 or of covering a front face (in-vehicle side) of the speaker 155 with a porous plate 156 and the like. Specifically, such a structure is mainly adopted that surfaces of convex portions 158, which protrude intricately from an outer wall board 157 that constitutes the double-wall structure of the above-mentioned vehicle into an inner space 152 side, are covered with an acoustic material 159 so as to prevent a resonance phenomenon of acoustic waves, and then the speaker 155 is built in the mounting hole 154 bored in the above-mentioned inner wall board 153.

In the former example of the above-mentioned conventional speaker, however, it is a problem that the speaker built therein in such a state as to protrude into the in-vehicle side may cause disfigurement of a vehicle interior. In the above-described latter example, in addition, even if the surfaces of the convex portions 158, which protrude into the inner space 152 of the vehicle door 151 and the like, are covered with the acoustic material 159, when the speaker 155 is directly built in the inner space 152 of the vehicle door 151 and the like, it is more likely for the acoustic waves to cause a complex resonance phenomenon in the large inner space 152 and to generate distortion due to receiving a bad influence of outside noise through the outer wall, which may result in such a problem that sound effects may be spoiled. Specifically, such an adverse effect may be brought about that the acoustic waves emitted from a back face of the speaker 155 interfere with each other in the inner space 152 to cause difficulty in producing a bass, which may tend to produce vigorless sounds. Further in many cases, rainwater, car washing water, and the like may creep especially into the inner space of the vehicle door 151 along a glass surface, and in those cases, the rainwater, the car washing water, and the like which crept therein may adversely affect the speaker that is an electric accessory.

The present invention is made to solve the above-described problems and to provide a speaker box having a mounting flange that enables to bury the speaker box, in which a speaker is stored, in a mounting hole in an inner wall of a vehicle instead of an removed speaker which is previously buried in the mounting hole.

### Disclosure of the Invention

In order to solve the above-mentioned problems, inventors of the present invention focus attention on the fact that: the existence of convex portions in an inner space of a double-wall structure part of a vehicle makes a structure complex, so that when a speaker is directly buried in this inner space, distortion is generated by parasitic oscillation involving resonance, which causes especially difficulty in producing a bass and tends to produce vigorless sounds. In addition, the inventors recognized anew that there are no ways in terms of a structure of a vehicle door to prevent rainwater, car washing water, and the like from creeping into the vehicle door. After carefully examining various countermeasures thereto, the inventors focus attention on the fact that when a speaker box in which the speaker is embedded is buried by using a mounting hole formed by boring an inner wall of the vehicle for an existing genuine speaker, propagation of acoustic waves to the inner space comprised of the complex structure can be controlled. Then, the inventors find that the problems can be solved by mounting to enable to bury and fix the above-mentioned speaker box in the mounting hole of the genuine speaker. Further, the inventors find a need to cover the speaker itself in order to protect the speaker from the rainwater, the car washing water, and the like.

The inventors further think that the above-mentioned speaker box can be disposed in inner walls in the vicinity of a rear seat side door, a ceiling, a dash board, or a rear seat, if necessary, as well as in inner walls of a door on a driving seat side and a door on a passenger seat side of the vehicle. In this light, the present invention is performed. Hereinafter, a specific structure of the present invention is described.

The present invention is a speaker box used in a vehicle and the speaker box is characterized to have such a structure that the speaker box is capable of being buried in a mounting hole in an inner wall of the vehicle instead of an removed speaker which is previously buried in the mounting hole. As such, the speaker box has such compatibility as to be capable of being buried directly in the existing speaker mounting hole, so that there is no need to bore a mounting hole on the inner wall of the vehicle when building-in the speaker box.

Additionally, since a back face side and a side face side of an embedded speaker are blocked from an inner space of the vehicle by a backboard and a side board of the speaker box that has been built in, the acoustic waves emitted from the speaker are not propagated into the inner space and there is no chance to be adversely affected by outside noise through an outer wall of the vehicle as well. Thereby, a resonance phenomenon does not cause attenuation or distortion in the acoustic waves, which results in propagating the acoustic waves efficiently in the direction of a front surface of the speaker, namely, in the direction of the opening of the speaker box. Further, the speaker embedded in the speaker box becomes not adversely affected by rainwater, car washing water, and the like.

Additionally, the present invention is characterized in that the above-mentioned speaker box comprises a mounting flange having the same shape as a mounting flange mounted on the removed speaker. As such, the mounting flange of the speaker box is made corresponsive to the mounting flange of the removed speaker, which saves the trouble of a labor to build-in the speaker box and greatly facilitates its mounting.

Additionally, the present invention is characterized in that the speaker box comprises a front surface board for mounting the speaker, a bottom board disposed to confront the front surface board with an appropriate distance from the front surface board, and a cylindrical wall interposed between the front surface board and the bottom board, wherein the cylindrical wall is made of a cylindrical paper tube.

Since the cylindrical paper tube is used as one member for comprising the speaker box, a cylindrical shape that is difficult to form with wood can be formed relatively easily, and radial thickness and length of the cylindrical part (a dimension in depth direction against the speaker mounting hole) can be easily adjusted. Further, the cylindrical paper tube can be manufactured at a lower cost and is easily obtainable.

Additionally, the present invention is characterized in that the cylindrical paper tube is a spiral paper tube in which base papers for the paper tube are overlapped with each other by means of adhesives interposed there between and rolled to have a radial thickness of 4 mm to 12 mm.

The thus-structured paper tube has enough strength and stiffness to be used as the speaker box of the speaker box, and it is appropriate as a member for producing excellent sound effects.

Additionally, the present invention is characterized in that a mounting portion (for example, a board-shaped structure in a flange-shape provided with some screw-inserting holes) for fixing on the interior surface is annularly formed around the front surface board to thereby mount on the interior surface (for example, an interior side of a wall surface on a front door) of the vehicle having a cavity (inner space) on a back side thereof. As structured above, only fixing the mounting portion on the interior surface can facilitate mounting the speaker box on the mounting surface.

Additionally, the present invention is characterized in that the speaker embedded in the speaker box includes a speaker for a bass and midrange and a speaker for an upper register. Such a two-way system speaker is embedded in the speaker box in block, so that the speaker does not protrude into an in-vehicle side and it is allowed for compact storage.

Further, the present invention is characterized in that the speaker boxes are buried at least in inner walls of a driving seat side door and a passenger seat side door of the vehicle. The speaker box can be buried in the mounting hole of the existing speaker, which is formed in an inner wall of a driving seat side door, a passenger seat side door, or the other inner walls of the vehicle as well, so that the present invention is to provide wide range of free choices relating to mounting the speaker box.

### Brief Description of Drawings

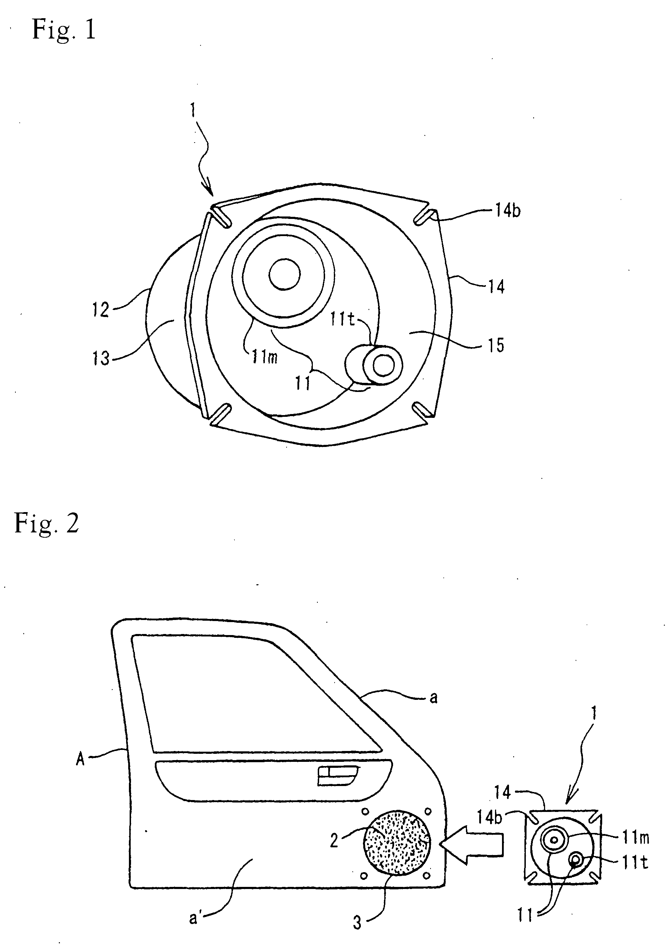

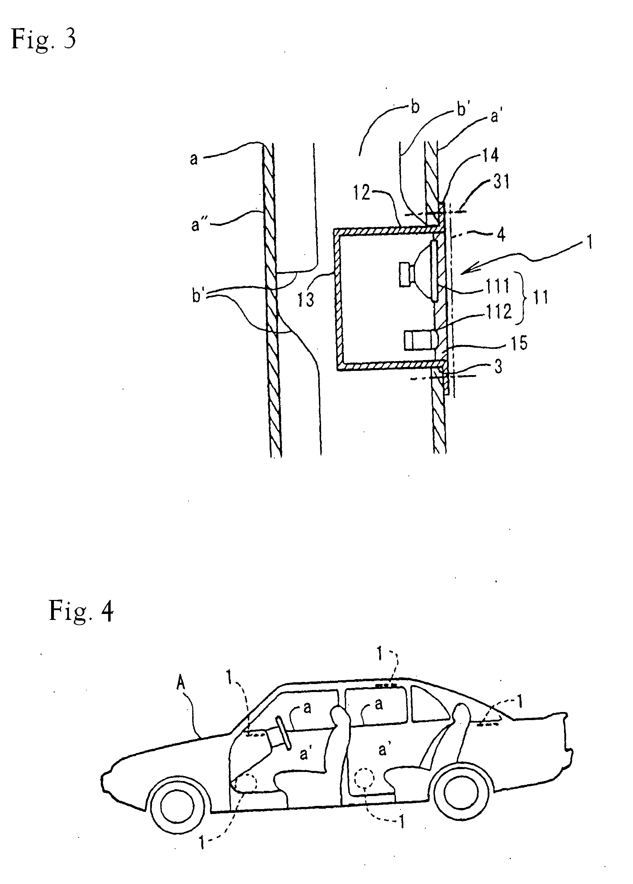

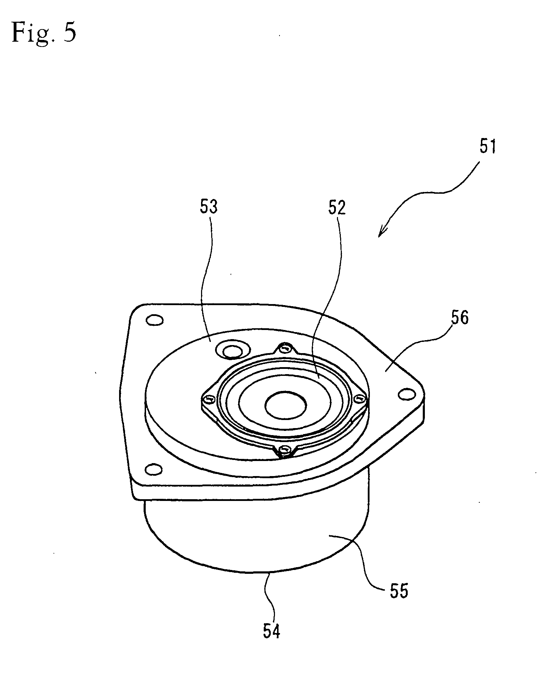

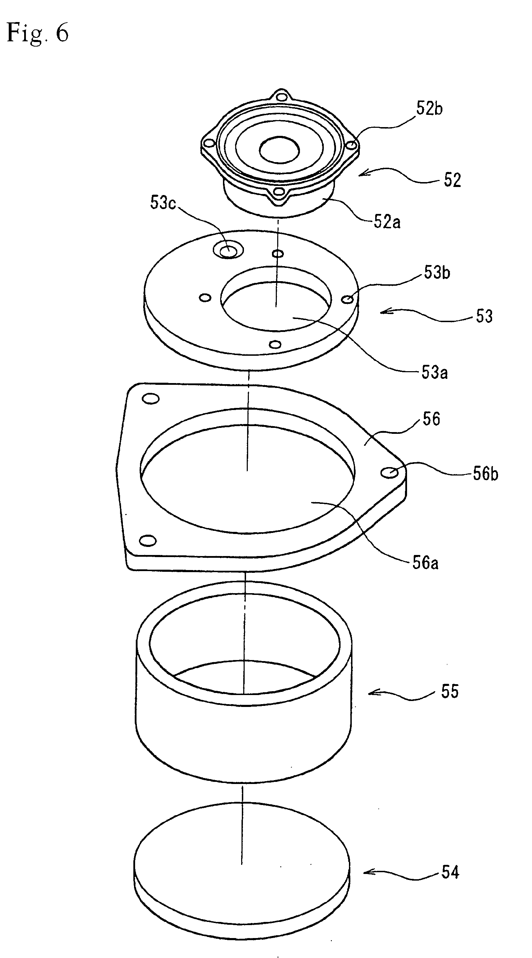

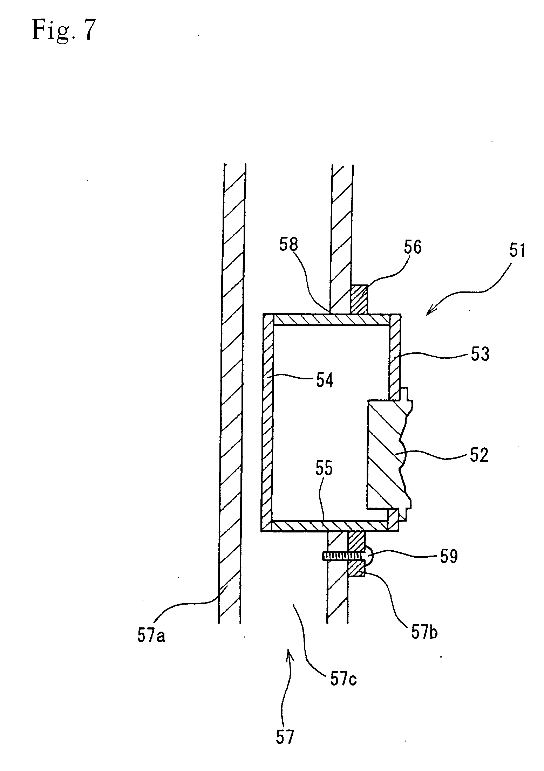

FIG. 1 is a perspective view showing an embodiment example of the present invention. FIG. 2 is an expanded view showing a state in which the present invention is mounted in an inner wall of a vehicle door. FIG. 3 is a sectional side view showing a state in which the present invention has been mounted in the inner wall of the vehicle. FIG. 4 is a side diagrammatic view showing positions in the vehicle, in which the present invention is mounted. FIG. 5 is a perspective view showing a modification example of a speaker box. FIG. 6 is an exploded perspective view of the speaker box shown in FIG. 5. FIG. 7 is a sectional view showing a state in which the speaker box is fixed. FIG. 8 is a side sectional view showing a state in which a conventional example is mounted in an inner wall of a vehicle. Note that a front surface board 15 shown in FIG. 1 is omitted in the drawing to make the inside of a speaker box 1 visible.

### Best Mode for Carrying out the Invention

Hereinafter, an embodiment of a speaker box of the present invention is specifically described based on the drawings. As described with a perspective view in FIG. 1, a speaker box 1 in this embodiment comprises a backboard 12, a side board 13 arising from a periphery of the backboard 12 in a short cylindrical-shape, a front surface board 15 (refer to FIG. 3) covering an opening of the side board 13, and a flange 14 extending outwardly from an opening edge portion of the side board 13. The flange 14 has bolt-retaining portions 14b for fixing the speaker box 1 with bolts. The speaker box 1, which is made of aluminum diecast or the like, is preferably used besides that of being made of wood or synthetic resin. Such speakers 11 as a mid range 11m that is a speaker for a bass and midrange, a tweeter 11t that is a speaker for an upper register, and the like are mounted on the front surface board 15. An acoustic material may be attached on an inner wall surface of the backboard 12 or the side board 13 of the speaker box 1, but attaching the acoustic material may not be limited to this part.

Then, as shown with an expanded view in FIG. 2 and a sectional side view in FIG. 3, the speaker box 1 is mounted in the existing speaker mounting hole 3 that is bored in an inner wall a' of a door a in a vehicle A in such manners that a front surface of the speaker 11, which includes the mid range 11m and the tweeter 11t, faces to the inside of a vehicle and the backboard 12 and the side board 13 of the speaker box 1 protrude into an inner space b which is sandwiched between an inner wall a' and an outer wall a" of the vehicle door a, and thereafter, the speaker box 1 is tightly fixed in the speaker mounting hole 3 through bolt-retaining portions 14b on the flange 14 by using mounting bolts 31.

Here, the flange 14 that is mounted on the speaker box 1 is made to have a size and a shape corresponding to those of a mounting flange for the removed speaker, and this greatly facilitates to mount the speaker box 1 in the existing speaker mounting hole 3 when the speaker box 1 is built in, which results in greatly improving labor effectiveness. Note that prior to mounting the speaker box 1, whether to load an acoustic material 2 in the inner space b, which is sandwiched between the inner wall a' and the outer wall a" of the vehicle door a, or not is nothing to do with acoustic wave interruption as long as the above-mentioned speaker box 1 is built in.

Additionally, since the embedded speaker 11 is blocked from the inner space b of the vehicle door a by the backboard 12 and the side board 13 of the speaker box 1 that has been built in, the acoustic waves are not propagated from the speaker 11 into the inner space b, so that the resonance phenomenon does not cause attenuation or distortion in the acoustic waves, which results in propagating the acoustic waves efficiently in the direction of the front surface of the speaker 11, namely, in the direction of the opening of the speaker box 1, without deteriorating a sound quality.

According to need, the opening of the speaker box 1 is covered with the porous plate 4, and then this porous plate 4 may be fixed on the speaker box 1 by tightening the mounting bolts 31 by using the bolt-retaining portions 14b that are formed on the flange 14 of the speaker box 1. This enables to protect the speaker 11 from impulsive force, dust, and the like, and to enhance fanciness of the speaker box 1.

As mentioned above, the speaker box 1 is buried to protrude into the inner space b of the vehicle door a. Though not shown in the drawing, when the acoustic material 2 is attached to the inner wall surfaces of the backboard 12 and the side board 13 of the above-mentioned speaker box 1 to absorb the acoustic waves, such operation and effect can be obtained that the acoustic waves in the direction toward the front surface of the speaker 11 can be propagated more efficiently together with operation and effect of the backboard 12 and the side board 13 of the speaker box 1. And then, even if the inner space b of the vehicle door a or the like has a complex structure, regardless of the presence of the acoustic material 2, due to the existence of convex portions b' and the like, the acoustic waves in the inner space b become not to cause the complex resonance phenomenon so as to solve such a problem that sound effects may be spoiled. Further, sound leakage of the speaker is also prevented.

Additionally, as shown with a side diagrammatic view in FIG. 4, the speaker box 1 relating to the present invention can be freely disposed to mount it at mounting positions shown with dotted lines in the drawing, namely, the inner walls a' of the vehicle doors a on both sides of a driving seat and a passenger seat that constitute the double-wall structures of the vehicle A, and besides them, the speaker box 1 can be freely disposed through the speaker mounting holes 3 that are bored in the inner walls a' or the like in the vicinity of a ceiling, a dash board, or a rear seat, to thereby provide wide range of free choices.

As mentioned above, according to the present invention, the speaker 11 is embedded in the speaker box 1 in such a manner that the front face thereof is opened, and then, when the speaker box 1 is buried in the existing speaker mounting hole 3 to face its opening front face toward the in-vehicle side of the vehicle A, the acoustic waves propagated from the speaker 11, which is stored in the speaker box 1 and includes the mid range 11m and the tweeter 11t, to the back face side and the side face side are diminished, so that the acoustic waves may not cause the resonance phenomenon in the inner space b.

Note that in this embodiment, such a structure as to embed two speakers of the mid range 11m and the tweeter 11t is employed, but a shape and a form of a speaker or the number thereof to be embedded are not limited to the structure of this embodiment. For example, the speaker box may be structured to embed only either one of a full range (full band) speaker or a coaxial (a plurality of cones are coaxially mounted) speaker, or to embed the plural number of speakers each of which has a divided band. Further, for example, the speaker box may be structured to embed the speaker for the bass and midrange without embedding the speaker for the upper register, and to install this speaker in other places in the vehicle (for example, indoor side of a base table of a door mirror). On the other hand, the speaker box may be structured to embed the speaker for the midrange and upper register and to install the speaker for the bass register in other places.

Next, a modification example of a speaker box is described based on FIG. 5 and FIG. 6. A speaker box 51 in this modification example comprises a speaker 52, a front surface board 53 for mounting the speaker 52, a back face portion 54 disposed to confront the front surface board 53 with an appropriate distance from the front surface board 53, a cylindrical side portion 55 arranged to be interposed between the front surface board 53 and the back face portion 54, and a mounting portion 56 fixed on an outer peripheral face of the cylindrical side portion 55 for mounting the speaker box 51.

The speaker 52 has a cylindrical portion 52a whose outside diameter is substantially the same as a diameter of a speaker unit mounting hole 53 on the front surface board 53. The front surface board 53 comprises an annular board member having substantially the same diameter as the outside diameter of the cylindrical side portion 55, and includes a speaker mounting hole 53a for fitting the cylindrical portion 52a of the speaker 52 and a port 53c. Specifically, the speaker box 1 is a speaker box (enclosure) of a bass reflex type (bass-reflex type) and it intends to expand bass regeneration with the use of the port 53c. The front surface board 53 is not limited to a special material, but wood such as plywood is normally used.

The speaker box 51 may employ an enclosed type in which the port 53c is not provided, or may employ phase inversion types other than the bass-reflex type. On each of the speaker 52 and the front surface board 53, a plurality of screw-inserting holes 52b, 53b are bored at positions corresponding to each other. The speaker 52 is made to be integrally fixed on the front surface board 53 by inserting the screws in the screw-inserting holes 52b, 53b.

The cylindrical side portion 55 is made of a cylindrical paper tube. As the paper tube, it is preferable to use a spiral paper tube in which base papers for the paper tube having appropriate thickness (for example, about 1mm) are overlapped with each other by means of adhesives interposed there between and rolled to have a radial thickness of 4 mm to 12 mm, preferably to have a radial thickness of 5 mm to 10 mm. Depending on the variety of the base papers for the paper tube, the base paper with its radial thickness less than 4 mm may fall short of its strength and stiffness, while the base paper with its radial thickness exceeding 12 mm results in unnecessarily using a great amount of material, which is not economical.

An outside diameter of the cylindrical side portion 55 is defined to correspond to a diameter of a speaker box mounting hole (for example, about 12 cm to 14 cm) that is previously provided on an interior surface of the vehicle (for example, a door trim that is a wall of an interior side of the door). Specifically, an annular-shaped speaker box mounting hole is normally provided in advance to mount a speaker box for a genuine car stereo, so that in order to use this hole as it is, the cylindrical side portion 55 is formed to have a cylindrical shape with its outside diameter substantially equal to a diameter of this hole.

Length of the cylindrical side portion 55 (a dimension in depth direction against the interior surface of the vehicle) is defined to a dimension in which the speaker box 51 can be accommodated in a cavity on a back side of the interior surface of the vehicle, and to the length in which volume capacity large enough to produce excellent sound effects can be secured. Specifically, for example, the length thereof is about 5 cm to 7 cm.

Since the cylindrical side portion 55 is made of a cylindrical paper tube, the cylindrical side portions 55 having various dimensions can be easily manufactured. Specifically, it is difficult to manufacture a cylindrical product having a desired dimension with the use of the wood such as the plywood or metal, while with the use of the paper tube, it is possible to obtain a paper tube having a desired radial thickness and an outside diameter only by adjusting, on manufacturing, an outside diameter of a core around which the base paper for the paper tube is rolled and by defining the number of times to be rolled around the core in consideration of thickness of the base paper of the paper tube. Additionally, length of the paper tube can be easily adjusted by cutting the long paper tube at an appropriate position. As such, the cylindrical paper tube is used for the cylindrical side portion 55, so that the speaker box 51, which can be mounted in the existing speaker box mounting hole, can be easily manufactured moreover at a lower cost.

The back surface portion 54 comprises an annular board member having substantially the same diameter as the outside diameter of the cylindrical side portion 55. The back surface portion 54 is not limited to a special material, but the wood such as the plywood is normally used. The front surface board 53 and the back surface portion 54 abut to be fixed on both end surfaces of the cylindrical side portion 55 through the adhesive. Note that the acoustic material can be attached to inner surfaces of the enclosure (concretely, an inner surface of the cylindrical side portion 55 and an inner surface of the back surface portion 54) if necessary. The mounting portion 56 is fixed by means of the adhesive on the outer peripheral face of the cylindrical side portion 55 adjacent to the front surface board 3 for mounting the speaker box 1 on the interior surface in the vehicle.

The mounting portion 56 is formed as an annular board-shaped structure in which a hole 56a having a substantially equal diameter to the outside diameter of the cylindrical side portion 55 is comprised. The mounting portion 56 of its back side (back surface portion 54 side) is made to abut on the interior surface of the vehicle, and then the screws are inserted into the screw-inserted holes 56b to thereby be fixed on the interior surface (for example, a front surface of the door trim) of the vehicle.

FIG. 7 is a sectional view showing a state in which the speaker box 1 is fixed on the interior surface (the front surface of the door trim) of the vehicle. A door 57 of the vehicle has a double structure section having an outer wall 57a, an inner wall (door trim) 57b, and a cavity 57c. A speaker box mounting hole 58 for mounting the speaker box 51 is bored in the front surface (interior surface of the vehicle) of the inner wall 57b. The speaker box 51 is mounted in the speaker box mounting hole 58 in such manners that the outer peripheral face of the cylindrical side portion 55 abuts on the inner peripheral face of the speaker box mounting hole 58 and the front surface board 53 is located to slightly protrude from the inner wall 57b into the in-vehicle side, and the speaker box 51 is fixed on the inner wall 57b with a screw 59.

### Industrial Availability

Using a speaker box relating to the present invention can prevent resonance, interference, and the like of acoustic waves in an inner space of a vehicle and a speaker can be protected from rainwater, car washing water, and the like as well. This results in contributing to regenerating a sound with less distortion and to improving durability of the speaker.

## Claims

1. A speaker box used in a vehicle, comprising a structure in which said speaker box is buried in a mounting hole in an inner wall of the vehicle instead of an existing speaker which is previously buried in the mounting hole.

2. A speaker box according to claim 1, further comprising a mounting flange having the same shape as a mounting flange mounted on the existing speaker.

3. A speaker box according to claim 1 or claim 2, comprising a front surface board for mounting a speaker, a bottom board disposed to confront said front surface board with an appropriate distance from the front surface board, and a cylindrical wall interposed between said front surface board and said bottom board, said cylindrical wall being made of a cylindrical paper tube.

4. A speaker box according to claim 3, wherein said cylindrical paper tube is a spiral paper tube in which base papers for the paper tube are overlapped with each other by means of adhesives interposed there between and rolled to have a radial thickness of 4 mm to 12 mm.

5. A speaker box according to claim 3 or claim 4, wherein a mounting portion for fixing on said interior surface is annularly formed around said front surface board to thereby mount on the interior surface of the vehicle having a cavity on a back side thereof.

6. A speaker box according to any one of claims 1 to 5, wherein a speaker embedded in said speaker box includes a speaker for bass and midrange and a speaker for upper register.

7. A speaker box according to any one of claims 1 to 6, wherein said speaker boxes are buried at least in inner walls of a driving seat side door and a passenger seat side door of the vehicle.

## Amended claims

### Amended claims under Art. 19.1 PCT

**1.** A speaker enclosure, comprising a structure in which said speaker enclosure is capable of being buried in a mounting hole in an inner wall of the vehicle instead of an removed speaker which is previously buried in the mounting hole,
said speaker enclosure comprises a backboard ,a side board arising from a periphery of the backboard in a short cylindrical-shape, a front surface board covering an opening of the side board, and a flange extending outwardly from an opening edge portion of the side board,
said flange is made to have a size and a shape corresponding to those of a mounting flange for the removed speaker,
said side board is formed to have a cylindrical shape with its outside diameter substantially equal to a diameter of this hole,
a speaker mounted in said front surface board is blocked from an inner space of the vehicle.

**2.** A speaker enclosure according to claim 1, further comprising a member selected the group consisting of aluminum diecast, wood and synthetic resin.
